# DEMANDE DE BREVET EUROPEEN

(11) **EP 4 296 924 A1**
(43) Date de publication de la demande: **27.12.2023**
(21) Numéro de dépôt: 23180372.7
(22) Date de dépôt: 20.06.2023
(51) Int. Cl.: G06Q 10/083, G06Q 50/28, B60R 7/00

(54) **CONTAINER POUR VÉHICULE AUTONOME**

(30) Priorité: 21.06.2022 CH 7442022
(71) Demandeur: Loxo AG, 3018 Bern (CH)
(72) Inventeur: Amini, Amin, 1752 Villars-sur-Glâne (CH); Eickelmann, Philipp, 1752 Villars-sur-Glâne (CH); Rayroud, Timothy, 1727 Corpataux-Magnedens (CH)
(74) Mandataire: P&TS SA (AG, Ltd.)

(57) **Abrégé**

La présente invention porte sur un dispositif de livraison (1) formant un espace de stockage (11), lequel comprend au moins une paroi interne (12) divisant l'espace de stockage en au moins deux compartiments distincts (11a, 11b) et un système d'occlusion (13) de l'espace de stockage (11) comportant au moins deux volets mobiles (13a, 13b), dont le déplacement relatif permet d'occulter une portion variable de l'espace de stockage (11). L'invention couvre en outre un véhicule autonome associé à un tel dispositif de livraison, ainsi qu'un système et un procédé de gestion de commandes depuis un entrepôt (210) vers un site de livraison (250)

## Description

### Domaine technique

La présente invention concerne un dispositif de livraison pour véhicule autonome ou semi-autonome. En particulier, la présente invention porte sur un container multi-compartiment pourvu d'un système d'occlusion et d'ouverture sélectif des différents compartiments. Un tel dispositif de livraison permet aux usagers destinataires des marchandises livrées d'accéder à un ou plusieurs compartiments dédiés, grâce au système d'occlusion sélectif. La présente invention couvre également un véhicule autonome ou semi-autonome équipé d'un tel dispositif de livraison. L'invention couvre en outre une méthode permettant de livrer de manière autonome ou semi-autonome des marchandises à un ou plusieurs utilisateurs.

### Etat de la technique

La livraison de marchandises connaît un essor important en lien avec le développement des moyens permettant de commander et de payer à distance. Notamment, un nombre de croissants de particuliers y recourt, augmentant ainsi la diversité et le nombre des commandes. Les derniers kilomètres représentent un défi majeur, en termes de coût et d'efficacité des livraisons.

En particulier, les livraisons de produits alimentaires, comprenant des produits frais périssables, nécessitent une gestion des flux adaptée.

Les véhicules autonomes sont de plus en plus utilisés dans les entrepôts dans les processus logistiques. Dans ce cadre, ils améliorent l'efficacité et les coûts associés aux flux de marchandises. Cependant, leur utilisation en dehors de ces environnements contrôlés, en zone urbaine par exemple, reste plus limitée.

Il y a donc matière à développer de nouvelles solutions, plus adaptées à la livraison de marchandises sur les derniers kilomètres, permettant une grande flexibilité tout en minimisant les coûts.

### Bref résumé de l'invention

Un but de la présente invention est de proposer un dispositif de livraison à domicile flexible et bon marché.

Un autre but de l'invention est de proposer un système de gestion des flux de marchandises optimisé pour une livraison rapide et efficace des commandes des clients.

Selon l'invention, ces buts sont atteints notamment au moyen du dispositif et du procédé objet des revendications indépendantes et décrits plus en détails dans les revendications dépendantes.

Cette solution présente notamment l'avantage par rapport à l'art antérieur de faciliter l'acheminement des marchandises commandées, jusqu'au domicile des clients.

### Brève description des figures

Des exemples de mise en oeuvre de l'invention sont indiqués dans la description illustrée par les figures suivantes :
- Figure 1a, 1b, 1c: vues en perspective de face et arrière, et vue de face d'un dispositif de livraison selon un mode de réalisation de la présente invention.
- Figure 2 : Vue schématique d'un véhicule autonome ou semi-autonome selon un mode de réalisation de la présente invention.

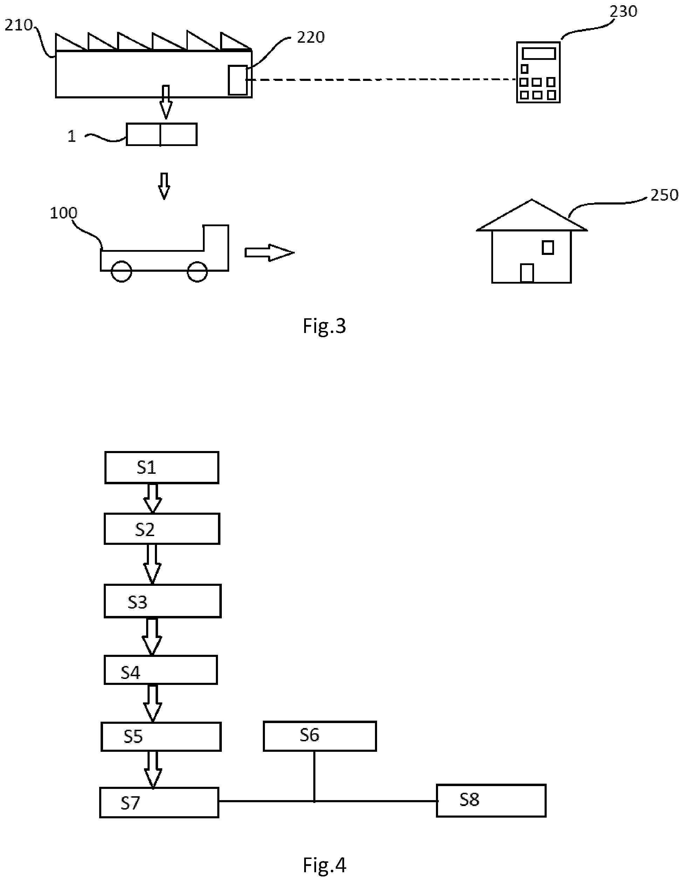

- Figure 3 : représentation schématique du système de gestion des flux de commande selon un mode de réalisation de la présente invention.
- Figure 4 : Représentation schématique de la méthode de gestion des commandes, selon un mode de réalisation de la présente invention.
- Figure 5 : Exemple de connexion autonome selon un mode de réalisation de la présente invention.

### Exemple(s) de mode de réalisation de l'invention

Le dispositif de livraison 1 selon la présente description comprend un ensemble de parois externes 10a, 10b, 10c, 10d, 10e formant un espace de stockage 11. Les parois externes désignent par exemple une paroi supérieure 10b, deux parois latérales 10a, 10d, une paroi inférieure 10c et une paroi arrière 10e. Les parois externes forment ainsi un container ouvert sur l'une de ses faces. En l'occurrence, la face dépourvue de paroi correspond à la face avant du dispositif de livraison 1 et permet d'accéder à l'espace de stockage 11. Les parois externes 10a, 10b, 10c, 10d, 10e peuvent prendre la forme de parois pleines faites par exemple en polymère ou en métal, ou en matériaux composite, ou en structure alvéolée ou tout autre matériau jugé adapté, incluant le bois. Elles peuvent être indépendamment ajourées de sorte à alléger au maximum le dispositif de livraison 1. Les parois externes peuvent être par exemple constituées d'un grillage ou d'une structure maillée. Alternativement, l'une ou plusieurs de ces parois externes peuvent être transparentes de sorte à visualiser l'intérieur de l'espace de stockage 11 depuis l'extérieur, par exemple à des fins de contrôle. Selon un mode de réalisation, les parois externes peuvent être conçues de sorte à produire une isolation thermique de l'espace de stockage 11, préservant ainsi la chaîne du froid lorsque c'est nécessaire. A cet effet, les parois peuvent être par exemples des structures en sandwich, comprenant un matériau isolant entre deux peaux rigides.

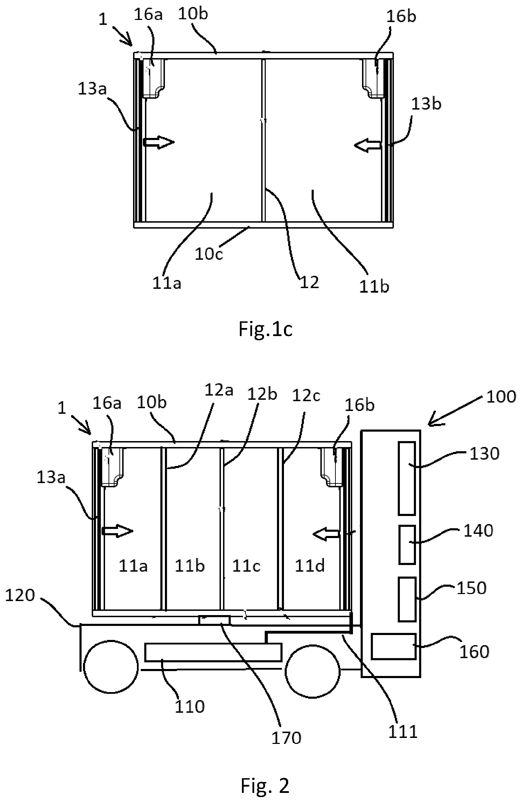

Le dispositif de stockage 1 comprend en outre au moins une paroi interne 12 divisant l'espace de stockage 11 en au moins deux compartiments distincts 11a, 11b. La paroi interne peut être disposée à la verticale ou bien à l'horizontale dans l'espace de stockage 11. Lorsque plusieurs parois internes 12a, 12b, 12c sont prévues (figure 2) elles peuvent indépendamment être horizontales ou verticales. Selon un mode de réalisation, toutes les parois internes 12 sont disposées parallèlement les unes aux autres, soit verticalement soit horizontalement. Les compartiments 11a, 11b ainsi créés peuvent être de volumes identiques ou différents. En d'autres termes, la ou les parois internes 12 peuvent être disposées à égales distances les unes des autres ou à des distances variables.

Selon un mode de réalisation, la ou les parois internes 12, ou certaines d'entre elles sont amovibles de sorte à pouvoir moduler le volume de l'espace de stockage 11 en un nombre variable de compartiments 11a, 11b. A cet effet, des dispositifs de fixation amovibles sont prévus tels que des clips, des ergots rétractables, des systèmes de serrage quart de tour, ou tout autre dispositif adapté pour retirer et installer facilement les parois internes 12. Alternativement ou en plus, une ou plusieurs de ces parois internes 12, peuvent être déplaçables dans l'espace de stockage 11 de sorte à pouvoir varier à la demande le volume des différents compartiments. A cet effet, un système de glissières ou de coulisses peut être prévu, dans lesquels des ergots fixés sur la ou les parois internes, peuvent glisser et se fixer à une position déterminée. Toute autre disposition équivalente peut être envisagée. Le cas échéant, la ou les parois internes 12 peuvent être déplacées manuellement ou bien être motorisées. La ou les parois internes 12 peuvent être aisément déplacées ou retirée en moins d'une minute, de préférence en moins de 30 secondes ou moins de 10 secondes. La ou les parois internes 12 peuvent indépendamment être constituées d'un matériau plein tel qu'un polymère, un matériau composite, une structure alvéolée ou tout équivalent. La ou les parois internes 12 peuvent être conçue de sorte à isoler thermiquement un compartiment 11a, 11b. La ou les parois internes peuvent alternativement être constituées d'une structure maillée, telle qu'un grillage ou bien être ajourées, pour une plus grande légèreté.

Le volume et/ou la disposition des différents compartiments 11a, 11b peuvent ainsi être modulés à la demande, par exemple en fonction du volume de la commande 260 à livrer.

Le dispositif de livraison 1 comporte en outre un système d'occlusion 13 de l'espace de stockage 11. Le système d'occlusion 13 est disposé sur la façade dépourvue de paroi externe fixe, désigné comme étant la façade avant. Le système d'occlusion 13 est adapté à occulter l'espace de stockage 11 et à permettre l'accès sélectif à l'un ou plusieurs des différents compartiments 11a, 11b. En d'autres termes, le système d'occultation 13 permet d'ouvrir l'espace de stockage 11 à un endroit spécifique, correspondant à un ou plusieurs compartiments 11a, 11b. Il permet en outre, le cas échéant, de ménager une ouverture de taille variable, adaptée à la taille du compartiment 11a, 11b correspondant. De la sorte, un usager tel qu'un client, peut accéder à l'un seulement des compartiments pour y retirer sa commande 260 sans risque d'accéder aux autres compartiments 11a, 11b, dédiés à d'autres commandes 260.

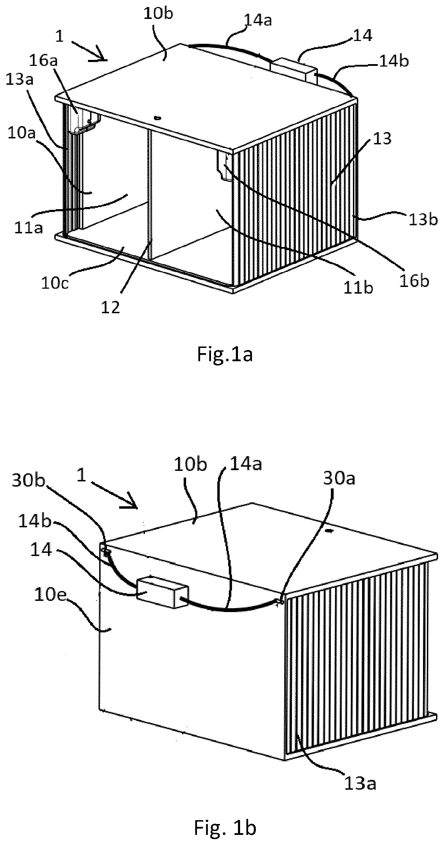

Selon un mode de réalisation illustré aux figures 1a et 1b, le système d'occlusion 13 comporte au moins deux volets mobiles 13a, 13b. Les volets mobiles sont conçus pour permettre chacun d'occulter la totalité de l'espace de stockage 11 ou au moins une partie substantielle de l'espace de stockage 11 telle que 50% ou plus, 70% ou plus, ou plus de 80% de l'espace de stockage 11. La partie non occultée par l'un des volets 13a, 13b, est alors occultable par le second des deux volets 13a, 13b. Les volets 13a, 13b peuvent être par exemple rétractables le long des parois latérales 10a, 10d du dispositif de livraison 1. Cette disposition est adéquate lorsque la ou les parois internes 12 sont disposées verticalement, soit parallèlement aux parois externes latérales 10a, 10d. Lorsque la ou les parois internes 12 sont disposées horizontalement, c'est-à-dire parallèlement aux parois supérieure 10b et inférieure 10c du dispositif de livraison 1, alors, les volets mobiles 13a, 13b sont plus avantageusement rétractables le long de ces parois supérieure 10b et inférieure 10c. Le terme « rétractable » est ici équivalent à escamotable ou repliable. Les volets mobiles 13a, 13b peuvent alors être conçus de sorte à coulisser le long des parois correspondantes. Alternativement, ils sont conçus de sorte à s'enrouler autour d'un axe d'enroulement. Ils peuvent à cet effet comporter plusieurs lattes articulées les unes aux autres, ou bien comporter un écran souple permettant de s'escamoter ou de s'enrouler. Les volets mobiles 13a, 13b peuvent alternativement se replier sur eux-mêmes pour libérer une partie de l'espace de stockage 11. Le repli peut être fait en accordéon pour des écrans souples, ou par empilement de lattes pour des volets mobiles composés de lattes articulées. Tout autre moyen de rétractation des volets mobiles 13a, 13b peut être envisagé en fonction des besoins.

En fonctionnement, deux volets mobiles 13a, 13b en vis-à-vis glissent conjointement devant l'espace de stockage 11. Lorsqu'ils sont joints l'un à l'autre, l'espace de stockage 11 est totalement occulté. Il n'est pas nécessaire que deux volets mobiles 13a, 13b se joignent au milieu de l'espace de stockage 11. Ils peuvent rester joints sur une portion substantielle de 'espace de stockage 11, voire sur tout l'espace de stockage 11. Lorsque deux volets mobiles en vis-à-vis glissent d'une valeur respective différente ils se disjoignent et permettent ainsi l'accès à l'espace de stockage 11. En fonction des déplacements respectifs de deux volets mobiles 13a, 13b associés l'ouverture peut être aménagée à un endroit spécifique de l'espace de stockage 11, en particulier devant un compartiment 11a, 11b prédéterminé. En outre, la dimension de l'ouverture ainsi aménagée peut être déterminée en fonction de l'écart entre les deux volets mobiles 13a, 13b. De la sorte, l'ouverture peut s'adapter aux dimensions du compartiment sélectionné.

Selon un mode de réalisation représenté par la figure 1a, l'espace de stockage 11 est divisé en deux compartiments 11a, 11b. Les deux volets mobiles 13a et 13b permettent chacun d'occulter l'un des deux compartiments 11a, 11b. Dans ce cas, ils se joignent à la hauteur de la paroi interne 12, séparant les deux compartiments 11a, 11b. L'accès à l'un des compartiments s'effectue par l'escamotage du volet mobile correspondant, alors que l'autre volet mobile reste inactivé. La paroi interne 12 peut être disposée au milieu de l'espace de stockage 11 de sorte à délimiter deux compartiments de volumes égaux. Cela n'exclut pas qu'elle soit décentrée, de sorte que les volumes des deux compartiments soient différents.

Selon un mode de réalisation, mieux représenté à la figure 2, l'espace de stockage 11 comporte plusieurs compartiments 11a, 11b, 11c, 11d, séparés par plusieurs parois internes 12a, 12b, 12c. Les volets mobiles 13a, 13b, occultent l'ensemble des compartiments, pouvant se rejoindre par exemple au niveau de l'une quelconque des parois interne 12a, 12b, 12c. Pour accéder à l'un des compartiments 11a, 11b, 11c, 11d, les deux volets mobiles 13a, 13b se déplacent conjointement d'une distance différente de sorte à libérer l'accès au compartiment désiré. Par exemple, pour accéder au compartiment 11a, le volet mobile 13a peut s'escamoter alors que le volet mobile 13b occulte les autres compartiments 11b, 11c, 11d. Pour accéder au compartiment 11b, le volet mobile 13a peut s'escamoter partiellement pour laisser le compartiment 11a occulté, et le volet mobile 13b occulte les deux autres compartiments 11c, 11d. Le procédé s'applique ainsi également aux compartiments 11c et 11d.

Les volets mobiles 13a, 13b peuvent être pourvus d'un système de verrouillage de sorte à ne pas pouvoir être manipulés par une personne non autorisée.

La ou les parois internes 12, peuvent être verrouillées dès lors que le dispositif de livraison 1 est installé sur un véhicule autonome ou semi-autonome 100. En outre ou alternativement, le déplacement ou le retrait des parois internes 12 peuvent être sécurisés par des moyens de protection adaptés pour n'être effectués que par des personnes autorisées.

Selon un mode de réalisation, un compartiment 11a, 11b peut être dimensionné de sorte à contenir 6 ou 8 ou 10 sacs standards de commissions. Les dimensions peuvent être par exemple de 800 X 560 X 538 mm. Le volume d'un compartiment peut être compris entre 150 et 300 litres, ou entre 200 et 250 litres, tel que 230 litres environs. Il est entendu que les dimensions des compartiments, ainsi que celles du dispositif de livraison 1, peuvent être librement adaptées en fonction des besoins.

Selon un mode de réalisation particulier, non représenté, deux paires de volets mobiles sont prévues, une paire de volets mobile étant disposées sur les parois externes latérales opposées du dispositif de livraison 1, l'autre paire de volets mobiles étant disposée sur les parois externes supérieure 10b et inférieure 10c. Les deux paires de volets mobiles peuvent se déplacer indépendamment l'une de l'autre. Les volets mobiles disposés sur les parois externes latérales permettent de ménager une ouverture verticale devant l'espace de stockage 11. Les volets mobiles disposés le long des parois externes supérieure 10b et inférieure 10c permettent de ménager une ouverture horizontale devant l'espace de stockage 11. De la sorte les compartiments 11a, 11b peuvent être disposés de manière superposée et de manière juxtaposée, formant une matrice de compartiments, et le système d'occultation 13 permet d'accéder sélectivement à chacun d'eux.

Les volets mobiles 13a, 13b sont de préférence motorisés. Ils peuvent ainsi être automatisés et actionnés en fonction de différents paramètres. Ils sont en particulier actionnés conjointement comme expliqué plus haut, de sorte à permettre l'accès sélectif à l'un des compartiment 11a, 11b du dispositif de livraison 1 lorsque des conditions préalables sont remplies. Une unité de commande 14 permet d'actionner deux volets 13a, 13b associés, de sorte à les déplacer chacun d'une distance prédéterminée propre à libérer une portion variable de l'espace de stockage 1. Dans le cas où deux paires de volets mobiles sont présentes, elles sont toutes deux activées de sorte à libérer l'accès à l'un des compartiments disposés en matrice ou à plusieurs compartiments contigus.

Chacun des volets mobiles 13a, 13b est individuellement motorisé par au moins un moteur 16a, 16b. Il peut s'agir par exemple de moteurs électriques, ou d'actionneurs pneumatiques, ou tout autre dispositif adapté. Pour un volet mobile 13a, 13b donné, un moteur 16a, 16b peut être associé ou intégré au dispositif de livraison 1. Il peut être par exemple disposé dans l'espace de stockage 11 à une position adéquate permettant d'activer le volet mobile correspondant. D'autres dispositions jugées adaptées sont possibles. Un système d'engrenage peut être prévu pour entraîner le volet mobile 13a, 13b. Alternativement, un système de poulies et de filins peut être prévu. D'autres dispositions adaptées peuvent être envisagées. Les moteurs 16a, 16b peuvent être inclus dans un boitier de protection ou insérés dans un compartiment spécifiquement dédié de sorte à ne pas être accessibles par les usagers non autorisés. Les moteurs 16a, 16b sont de préférence alimentés par une source d'énergie 110 extérieure au dispositif de livraison 1. Selon un mode de réalisation, le dispositif de livraison 1 peut être branché sur le secteur, dans un entrepôt, de sorte que les volets mobiles 13a, 13b puissent être activés, par exemple lors du chargement des commandes 260. A cet effet, les différents compartiments 11a, 11b peuvent être sélectivement ouverts de sorte à éviter toute erreur lors du chargement du dispositif de livraison 1 avec les différentes commandes 260. Alternativement ou en plus, le dispositif de livraison 1 comporte les moyens de connexion adéquats pour être branché sur une batterie d'un véhicule 100 ou sur une batterie auxiliaire externe au véhicule. Les moteurs 16a, 16b peuvent être par exemple de type pas à pas et permettre de déplacer les volets mobiles 13a, 13b d'une distance contrôlée. Alternativement ou en plus, des capteurs de position peuvent être prévus pour déterminer la position des volets mobiles 13a, 13b et pour les déplacer de la distance requise.

Selon une disposition avantageuse illustrée par la figure 2, le dispositif de livraison 1 est indépendant de tout véhicule 100. En d'autres termes, il peut être disposé de manière amovible sur un véhicule autonome ou semi-autonome 100. Le dispositif de livraison 1 comporte à cet effet un système de fixation 170 permettant de le fixer sur un véhicule autonome ou semi-autonome 100. Par exemple, un dispositif de verrouillage peut être prévu sur sa paroi externe inférieure 10c, ou sur ses parois externes latérales 10a, 10d, de sorte que le dispositif de livraison puisse être sécurisé sur un véhicule autonome ou semi-autonome 100. Selon un mode de réalisation, le système de fixation 170 n'est accessible ou activable que par des utilisateurs autorisés. En d'autres termes, le destinataire d'une commande 260 peut ne pas avoir accès au système de fixation 170 du dispositif de livraison 1. Pour ce faire, le système de fixation 170 peut être protégé par un boitier ou un verrou ou tout autre élément de protection adéquat.

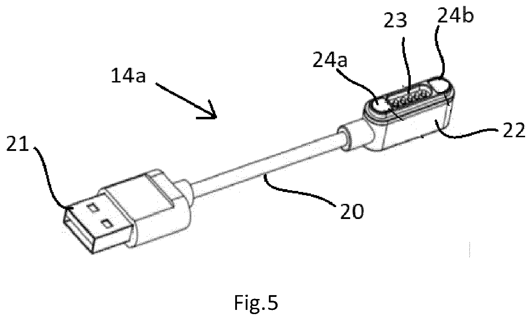

Le dispositif de livraison 1 comporte avantageusement un ou plusieurs points de connexions autonomes 30a, 30b, (figure 1b) permettant de connecter le dispositif de livraison 1 à différents éléments extérieurs au dispositif de livraison 1. En particulier, le ou les points de connexion autonomes 30a, 30b permettent de connecter automatiquement le dispositif de livraison 1 dès lors qu'il est disposé de manière appropriée sur son support, par exemple sur le support 120 dédié d'un véhicule autonome ou semi-autonome 100. La connexion s'établit alors sans besoin d'intervenir de manière spécifique. Lors du retrait du dispositif de livraison 1 de son support 120. Le ou les point de connexion autonomes 30a, 30b permettent de désolidariser automatiquement le dispositif de livraison 1 de tout branchement externe, sans besoin d'intervenir de manière spécifique. Le ou les points de connexion autonomes 30a, 30b peuvent comprendre à cet effet un système de guidage, un système d'encrage ou un système de clipsage automatique. Selon un mode de réalisation particulier, le ou les point de connexion autonome 30a, 30b comportent au moins une surface aimantée permettant d'établir la connexion avec un dispositif aimanté 22 (figure 5) extérieur au dispositif de livraison 1.

La figure 5 donne un exemple de connexion autonome 14a permettant de connecter le dispositif de livraison 1 lors de son installation sur un véhicule autonome ou semi-autonome 100. La connexion autonome 14a comporte un câble conducteur 20 dont une des extrémités est pourvue d'un connecteur 21 destiné à établir une connexion avec un élément extérieur au dispositif de livraison 1. Un tel élément peut être par exemple l'unité de commande 14, intégrée au véhicule autonome ou semi-autonome 100. D'autres éléments extérieurs au dispositif de livraison 1 peuvent être considérés, tel qu'une source d'énergie 110, un module de communication permettant d'envoyer et/ou recevoir des données, ou tout autre dispositif nécessaire. Le connecteur 21 est alors d'un format adapté. Il peut être un connecteur USB, ou un connecteur d'un autre type selon les besoins. Le câble conducteur 20 comporte à son autre extrémité un connecteur autonome 22, pourvu des différents éléments de contact 23 tels que des pines. Les différents éléments de contact 23 sont adaptés aux besoins et au type de connexion. Le connecteur autonome 22 comporte en outre une ou plusieurs surfaces aimantées 24a, 24b permettant d'interagir avec les surfaces aimantées correspondantes du ou des points de connexion autonome 30a, 30b du dispositif de livraison 1.

La présente invention couvre, outre le dispositif de livraison 1, un véhicule autonome ou semi-autonome 100 permettant d'accueillir un ou plusieurs dispositifs de livraison 1. La figure 2 présente une illustration schématique d'un tel véhicule. Pour les besoins de la présente description, un véhicule autonome désigne tout véhicule pouvant se déplacer sans conducteur à son bord. Un véhicule autonome désigne tout véhicule flottant, volant, roulant. De préférence, un véhicule autonome selon la présente invention désigne un véhicule roulant, plus particulièrement un véhicule roulant dédié à la livraison de marchandises. Il évolue de préférence en zone urbaine sans voie dédiée. Il s'inscrit donc dans la circulation générale. Un véhicule autonome 100 selon la présente invention comporte alors au moins une source d'énergie 110, telle qu'une batterie ou tout équivalent. Le véhicule autonome comprend un ou plusieurs dispositifs lui permettant de progresser de manière autonome, sélectionnés par exemple parmi un système de pilotage 130, un système de localisation 140, un système de détection 150, une unité de calcul 160.

Le système de pilotage 130 permet de faire progresser le véhicule selon différents paramètres de vitesse et/ou de direction. Il permet d'activer le freinage, les roues directrices, le dispositif d'accélération ainsi que d'autres éléments du véhicule autonome 100 tels que des émissions lumineuses ou sonores, ou tout autre équipement nécessaire à la bonne conduite du véhicule.

Le système de localisation 140 permet de localiser le véhicule dans son environnement. Il peut comporter un ou plusieurs dispositifs de cartographie, notamment des cartes digitales, un ou plusieurs capteurs de position et/ou de mouvement, un ou plusieurs dispositifs de communication. Le système de localisation peut par exemple comprendre un système GPS ou tout équivalent.

Le système de détection 150 comprend au moins un dispositif de détection de l'environnement dans lequel progresse le véhicule 100. Il peut comprendre un ou plusieurs dispositifs sélectionnés parmi un sonar, un lidar, un dispositif vidéo ou de caméra, un dispositif infra-rouge ou tout autre dispositif propre à guider le véhicule dans l'environnement en temps réel. Le système de détection 150 peut interagir avec le système de localisation 140 pour contribuer à la localisation du véhicule.

L'unité de calcul 160 synchronise par exemple l'ensemble des informations reçues par les différents autres détecteurs et/ou dispositifs pour la bonne conduite du véhicule autonome 100. L'unité de calcul 160 permet en outre de prédéterminer un parcours du véhicule autonome comprenant au moins un site de livraison 250 et d'activer le système d'occultation 13 des compartiments 11a, 11b selon les sites de livraison 250.

Un véhicule semi-autonome peut évoluer en mode autonome, comme décrit précédemment et être en outre connecté à un centre de pilotage à distance, permettant de reprendre un pilotage manuel si besoin. Selon un mode de réalisation particulier, le véhicule semi-autonome peut comporter les commandes nécessaires à son pilotage par un conducteur humain, installé à bord du véhicule.

Le véhicule autonome ou semi-autonome 100 selon la présente description comporte un support 120 adapté à recevoir un ou plusieurs dispositifs de livraison 1. Le support reçoit le ou les dispositifs de livraison, de préférence de manière amovible. Un tel support peut prendre la forme d'un plateau sur lequel repose le ou les dispositifs de livraison 1. Il peut alternativement prendre la forme d'une structure tridimensionnelle dans laquelle peut s'insérer un ou plusieurs dispositifs de livraison 1. Le support est de préférence pourvu d'au moins un moyen de fixation 170, permettant de maintenir les dispositifs de livraison. Le ou les moyens de fixation 170 peuvent être sécurisés de sorte à n'être manipulés que par des personnes autorisées. Un dispositif de livraison 1 peut alors être dissocié du véhicule autonome ou semi-autonome 100 selon les besoins.

Le véhicule autonome ou semi-autonome 100 comporte une unité de commande 14 permettant d'activer le système d'occultation 13. L'unité de commande 14 peut être connectée par exemple à l'unité de calcul 160, laquelle est adaptée à coordonner les déplacements du véhicules autonome ou semi-autonome 100 et l'activation du système d'occultation 13 en fonction de sa position, notamment sur un site de livraison 250. L'unité de commande 14 peut en outre être connectée à d'autres éléments embarqués sur le véhicule autonome ou semi-autonome 100 ou à des éléments distants du véhicules tel qu'un centre de contrôle ou un centre de pilotage à distance. L'unité de commande 14 est pourvue de connexions autonomes 14a, 14b adaptées à l'installation rapide du ou des dispositifs de livraison 1 sur le véhicule autonome ou semi-autonome 100.

Le véhicule autonome ou semi autonome et/ou le ou les dispositifs de livraison 1 peuvent être pourvus de capteurs ou détecteurs additionnels. Par exemple, un capteur de contact peut être prévu pour s'assurer d'une bonne connexion d'un dispositif de livraison 1 à son unité de contrôle 14. Des capteurs de températures peuvent être prévus dans l'espace de stockage 11, notamment pour le respect de la chaîne du froid. Alternativement ou en plus, le véhicule autonome ou semi-autonome 100 peut être pourvu d'un système actif de refroidissement permettant de réguler la température au sein de l'espace de stockage 100.

La présente invention couvre en outre un système de gestion d'un flux de marchandises 200. Le système de gestion 200 comprend au moins un entrepôt de stockage 210, dans lequel les marchandises proposées à la vente sont stockées. Le système de gestion 200 comprend en outre un ou plusieurs serveur 220 permettant de recevoir, de stocker et de gérer les commandes 260 soumises par les clients. Le système de gestion 200 comprend au moins un terminal de commande 230 permettant de soumettre une commande 260 au serveur 220 à distance. Le terminal de commande 230 peut par exemple prendre la forme d'un téléphone portable ou d'une tablette ou d'un ordinateur par lequel un client peut sélectionner les produits à acheter et soumettre sa commande 260. Une application spécifique peut être nécessaire pour ce faire. Selon les besoins, le client peut faire l'objet d'un enregistrement préalable et/ou d'une autorisation. Un moyen de paiement peut être intégré ou non au terminal de commande 230. Tout autre aménagement spécifique peut être envisagé. La commande 260 peut être soumise au serveur 220 au moyen de tout système de communication adapté tel que le réseau hertzien, selon un protocole compatible avec la 4G ou la 5G, internet ou tout réseau équivalent.

Le système de gestion des flux de marchandises 200 comporte en outre au moins un dispositif de livraison 1 tel que décrit ci-dessus. De préférence, il comporte un stock de tels dispositifs de livraison 1, pouvant être tous identiques ou bien modulables en fonction des commandes 260 considérées. Les dispositifs de livraison 1 peuvent être identifiés par dispositif d'identification tel qu'une vignette RFID, un code-barres, un QR code ou tout autre dispositif d'identification adapté.

Le système de gestion des flux de marchandises 200 comporte en outre au moins un véhicule autonome ou semi-autonome 100 tel que décrit ci-dessus. De préférence, le système 200 comprend une flotte de plusieurs véhicules autonomes ou semi-autonomes 100 dont le nombre est adapté au nombre de commandes 260 à livrer. Les véhicules autonomes ou semi-autonomes 100 d'une même flotte peuvent être tous identiques. Alternativement ils peuvent être de plusieurs modèles différents, étant notamment adaptés à embarquer un nombre spécifique de dispositifs de livraison 1. Ainsi, en fonction des parcours et/ou du nombre de commandes à livrer, un véhicule autonome ou semi-autonome 100 spécifique peut être sélectionné. Le système de gestion des flux de marchandises 200 peut en outre comporter un ou plusieurs centres de pilotage à distance des véhicules 100. Les véhicules autonomes ou semi-autonomes peuvent être reliés en permanence ou à intervalles de temps prédéterminés au serveur 220 ou à un ensemble de serveurs, de sorte que leur position, leur statut de livraison, leur autonomie et tout autre paramètre utile puisse être suivi et contrôlé.

Alternativement ou en plus, les dispositifs de livraison 1 sont connectés en permanence ou par intermittence au serveur 220 ou à un ensemble de serveurs. Leur localisation peut ainsi être suivie. L'activation de leur système d'occultation 13 peut également faire l'objet d'un suivi à distance. En fonction des différents mouvements des volets mobiles 13a, 13b, une commande 260, disposée dans un compartiment 11a, 11b peut être jugée livrée ou non encore livrée. En particulier, si le système d'occultation 13 est activé de sorte à libérer l'accès d'un compartiment 11a, 11b, alors la commande 260 correspondante est considérée comme livrée. Dans le cas contraire, la commande 260 peut être considérée comme n'ayant pas été livrée. Alternativement, des capteurs spécifiques tels qu'un système de pesée peut être inclus dans l'espace de stockage 11 pour déterminer si une commande y est encore présente ou a été retirée. D'autres paramètres tels que la température de l'espace de stockage 11 ou des compartiments 11a, 11b peuvent faire l'objet d'un suivi à distance. Alternativement ou en plus, les dimensions des compartiments 11a, 11b, notamment dans le cas de cloison internes 12 déplaçables ou amovibles, peuvent être enregistrées dans le serveur 220 au moment de la préparation de la commande 260. Par exemple, le serveur peut déterminer la dimension optimale des compartiments en fonction des commandes traitées et donner les indications correspondantes au préparateur de la commande. Alternativement, si les parois internes sont motorisées, elles peuvent être déplacées de manière automatique. Des capteurs de position peuvent être prévus de sorte à déterminer en temps réel la position des différentes parois internes 12 et la transmettre au serveur 220.

La présente invention couvre en outre un procédé de gestion de commandes 260 depuis un entrepôt 210 vers un ou plusieurs sites de livraison 250. Le procédé comprend au moins une étape S1 de passer une commande 260 d'une ou plusieurs marchandises depuis un terminal de commande 230. Une commande 260 est passée par un client qui sélectionne depuis le terminal de commande 230 un ou plusieurs articles proposés à la vente et qui valide la liste de produit sélectionnés constituant la commande 260. La commande peut être associée à un site de livraison 250. Le site de livraison peut être l'adresse du client ou tout autre endroit sélectionné par le client depuis le terminal de commande 230. Selon un mode de réalisation, le client peut recevoir un accusé réception. Il peut en outre recevoir des informations concernant la date et l'heure de livraison, les coordonnées du compartiment 11a, 11b et/ou du véhicule autonome ou semi-autonome 100 en charge de la livraison. Il peut en outre recevoir un code permettant d'accéder au compartiment 11a, 11b dans lequel sa commande sera livrée. Ces données peuvent être générées automatiquement à la réception de la commande 260. Alternativement, ces données ou une partie de ces données sont générée ultérieurement lors de la préparation de la commande et peuvent donc être transmises ultérieurement au client.

Le procédé comprend au moins une étape S2 de recevoir et stocker la commande 260 sur un serveur 220 ou un ensemble de serveurs, en vue de sa préparation. La commande 260 peut être affichée à l'attention d'un préparateur humain. Alternativement, la commande 260 peut être transmise à un véhicule autonome dédié à la préparation de commandes et adapté à collecter de manière automatique les articles dans un entrepôt 210 aménagé à cet effet. La commande peut être stockée sur le serveur 220 en combinaison avec d'autres informations telles que le site de livraison 250, les dimensions préconisées du compartiment correspondant 11a, 11b et/ou l'attribution d'un compartiment 11a, 11b. Un dispositif de livraison 1 spécifique peut en outre être associé à la commande 260, lequel est identifié par son élément d'identification le cas échéant.

Le procédé de gestion des commandes 200 comprend au moins une étape S3 de sélectionner les articles constituant la commande 260 dans un entrepôt de stockage 210 et de les transférer dans un dispositif de livraison 1 ou dans le dispositif de livraison 1 prédéterminé automatiquement lors de la réception de la commande 260. Dans le cas où aucun dispositif de livraison 1, ou aucun compartiment 11a, 11b n'a été prédéterminé, ils peuvent faire l'objet d'une validation manuelle lors de la préparation de la commande 260.

Le procédé de gestion des commandes 200 comprend au moins une étape 54 d'occulter l'espace de stockage 11 du dispositif de livraison 1, une fois l'ensemble des commandes chargées dans le dispositif de livraison 1. Selon un mode de réalisation, l'ensemble des compartiments 11a, 11b peuvent être accessibles par le préparateur lors de la préparation des commandes 260 puis occultés lorsque les commandes sont prêtes à être expédiées. Alternativement, les différents compartiments 11a, 11b peuvent être ouverts sélectivement lors de la préparation des commandes correspondantes puis refermés de sorte à éviter toute erreur de chargement.

Le procédé de gestion des commandes 200 comprend au moins une étape S5 de fixer le dispositif de livraison 1 sur le support 120 d'un véhicule autonome ou semi-autonome 100. A cet effet, un système de fixation sécurisé 170 peut être prévu. Le dispositif de livraison peut être transitoirement posé sur un support spécifique pour la préparation des commandes puis transféré sur le support 120 d'un véhicule autonome ou semi autonome 100 lorsque les commandes sont prêtes. Ce transfert est de préférence effectué via un système mécanisé tel qu'une chaîne de convoyage ou tout autre dispositif de transfert de charges. De la sorte les efforts des opérateurs sont limités et focalisés sur la préparation des commandes 260. Selon un mode de réalisation, l'étape S5 de fixer le dispositif de livraison 1 sur un véhicule autonome ou semi autonome intervient avant les étapes S3 et S4 décrites ci-dessus.

Le procédé de gestion des commandes 200 comprend au moins une étape S6 de programmer le parcours d'un véhicule autonome ou semi-autonome 100. La programmation du parcours peut être effectuée une fois que le dispositif de livraison 1 est fixé sur le véhicule autonome ou semi autonome et que les commandes sont prêtes à être expédiées. Alternativement, le parcours d'un véhicule autonome ou semi autonome 100 peut être programmé simultanément à la préparation des commandes 260 de sorte à limiter les temps de préparation. Ainsi, un véhicule autonome ou semi autonome 100 peut être automatiquement associé à un dispositif de livraison 1, en cours de chargement, ou avant son chargement, et programmé avec le parcours adéquat comportant le ou les sites de livraison 250 correspondant aux commandes 260. Chacun des sites de livraison 250 du parcours peut être associé à un compartiment, de sorte que le véhicule une fois sur place, le système d'occultation 13 soit activé correctement pour laisser l'accès au compartiment correspondant 11a, 11b.

Le procédé de gestion des commandes 200 comprend une étape 57 d'activer le système d'occlusion 13 de sorte à libérer l'accès à chacun des compartiments 11a, 11b associé au site de livraison 250 correspondant, une fois que le véhicule autonome ou semi-autonome 100 a atteint le site de livraison 250. L'activation du système d'occlusion est effectuée par l'unité de commande 14 intégrée au véhicule autonome ou semi autonome 100. L'activation peut être initiée automatiquement, par exemple par l'unité de calcul 160. Alternativement, elle peut être pilotée manuellement à distance depuis un centre de contrôle. Alternativement, elle est initiée par le client lui-même, de sorte à s'assurer que sa commande 260 lui soit bien livrée. A cet, le terminal de commande 230 ayant servi à passer la commande 260 peut également servir à activer le système d'occultation 13 lorsque le véhicule autonome ou semi autonome atteint le site de livraison 250.

Le procédé de gestion des commandes 200 peut comprendre en outre une étape S8 de validation de livraison. Par exemple, l'actionnement du système d'occultation 13 peut être utilisé à cette fin. L'occultation du compartiment 11a, 11b ouvert peut indiquer que la commande est bien livrée. Cela peut être notamment le cas si le client doit activer lui-même l'ouverture du compartiment 11a, 11b. Alternativement, le client peut lui-même valider la réception de sa commande 260, par exemple via son terminal de commande 230 ou via un dispositif adapté intégré au véhicule autonome ou semi autonome 100.

### Numéros de référence employés sur les figures

- 1: Dispositif de livraison
- 10a, 10b, 10c, 10d, 10^{e}: Parois externes
- 11: Espace de stockage
- 11a, 11b: Compartiments
- 12, 12a, 12b, 12c: Parois internes
- 13: Système d'occlusion
- 13a, 13b: Volets mobiles
- 14: Unité de commande
- 14a, 14b: Connexions autonomes
- 16a, 16b: Moteurs
- 20: Câble conducteur
- 21: Connecteur
- 22: Connecteur autonome
- 23: Eléments de contact
- 24a, 24b: Surfaces aimantées
- 30a, 30b: Point de connexion autonomes
- 100: Véhicule autonome
- 110: Source d'énergie
- 111: Connexion d'alimentation
- 120: Support
- 130: Système de pilotage
- 140: Système de localisation
- 150: Système de détection
- 160: Unité de calcul
- 170: Système de fixation
- 200: Système de gestion des flux
- 210: Entrepôt
- 220: Serveur
- 230: Terminal de commande
- 250: Site de livraison
- 260: Commande
- S1, S2, S3, S4, S5, S6, S7, S8: Etapes de procédé

## Revendications

1. Dispositif de livraison (1) comprenant un ensemble de parois externes (10a, 10b, 10c, 10d, 10e) formant un espace de stockage (11), au moins une paroi interne (12) divisant l'espace de stockage en au moins deux compartiments distincts (11a, 11b) et un système d'occlusion (13) de l'espace de stockage (11), ledit système d'occlusion (13) comportant deux volets mobiles (13a, 13b) motorisés ou plus, dont le déplacement relatif permet d'occulter une portion variable de l'espace de stockage (11).

2. Dispositif selon la revendication 1, comprenant en outre une unité de commande (14) permettant d'actionner les deux volets (13a, 13b) de sorte à les déplacer chacun d'une distance prédéterminée propre à occulter ladite portion variable de l'espace de stockage (1).

3. Dispositif de livraison (1) selon l'une des revendications 1 et 2, la proportion non-occultée de l'espace de stockage (1) correspondant à un ou plusieurs des compartiments (11a, 11b) de l'espace de stockage (1).

4. Dispositif selon l'une des revendications 1 à 3, comprenant en outre un ou plusieurs points de connexion autonomes (30a, 30b) permettant de connecter automatiquement ledit dispositif de livraison à un ou plusieurs éléments extérieurs au dispositif de livraison (1).

5. Dispositif de livraison (1) selon l'une des revendications 1 à 4, la au moins une paroi interne (12) étant amovible et/ou déplaçable dans l'espace de stockage (11) de sorte à pouvoir moduler le volume et/ou le nombre des au moins deux compartiments (11a, 11b).

6. Dispositif de livraison (1) selon l'une des revendications 1 à 5, comprenant en outre un système de fixation (170) adapté à fixer de manière amovible et sécurisée ledit dispositif de livraison (1) sur un support (120).

7. Véhicule autonome ou semi-autonome (100) comprenant une source d'énergie (110) assortie d'au moins une connexion d'alimentation (111) et d'au moins un support (120) adapté à recevoir de manière amovible un ou plusieurs dispositifs de livraison (1) selon l'une des revendications 1 à 6, ledit véhicule comprenant en outre au moins une unité de commande (14) adapté à l'activation de systèmes d'occultation (13) d'un ou plusieurs dispositifs de livraisons (1).

8. Véhicule autonome ou semi-autonome (100) selon la revendication 7, pourvu en outre d'un système de pilotage (130), d'au moins un système de localisation (140), d'au moins un système de détection de l'environnement (150), ledit véhicule comprenant ou étant connecté à au moins une unité de calcul (160) programmée pour conduire ledit véhicule (100) sur un parcours comprenant au moins un arrêt à un site de livraison (250), et pour actionner le système d'occultation (13) de sorte à libérer l'accès à l'un ou plusieurs des compartiments (11a, 11b) de l'espace de stockage (11) associé audit au moins un site de livraison (250).

9. Système de gestion d'un flux de marchandises (200) comprenant au moins un entrepôt de stockage (210), un serveur (220) adapté à recevoir les commandes de clients, au moins un terminal de commande (230) adapté à soumettre des commandes de clients, au moins un dispositif de livraison amovible (1) selon l'une des revendications 1 à 6 et au moins un véhicule autonome ou semi-autonome (100) selon l'une des revendications 7 et 8.

10. Procédé de gestion d'un flux de marchandise comprenant :
- Au moins une étape S1 de passer une commande (260) d'une ou plusieurs marchandises depuis un terminal de commande (230), ladite commande (260) étant associée à un site de livraison (250),
- Au moins une étape S2 de recevoir et stocker la commande (260) sur un serveur (220),
- Au moins une étape S3 de sélectionner ladite une ou plusieurs marchandises de ladite commande (260) dans un entrepôt de stockage (210) et de la transférer dans un compartiment (11a, 11b) dédié de l'espace de stockage (11) d'un dispositif de stockage (1) amovible,
- Au moins une étape S4 d'occulter l'espace de stockage (11) dudit dispositif de livraison (1),
- Au moins une étape S5 de fixer le dispositif de livraison (1) sur le support (120) d'un véhicule autonome ou semi-autonome (100),
- Au moins une étape S6 de programmer le parcours dudit au moins un véhicule autonome ou semi-autonome (100) avec un ou plusieurs sites de livraison (250), chacun desdits un ou plusieurs sites de livraison étant associé à une commande (260) et à un ou plusieurs compartiments (11a, 11b),
- Une étape S7 d'activer le système d'occlusion (13) de sorte à libérer l'accès à un ou plusieurs compartiments (11a, 11b) associé au site de livraison (250), une fois que le véhicule autonome ou semi-autonome (100) a atteint ledit site de livraison (250),
- Au moins une étape S8 de validation de la livraison.
